# EUROPEAN PATENT SPECIFICATION

(11) **EP 4 401 412 B1**
(45) Date of publication and mention of the grant of the patent: **09.12.2026**
(21) Application number: 21960948.4
(22) Date of filing: 21.10.2021
(51) Int. Cl.: H04N 23/60, H04N 25/51, H04N 25/583, H04N 25/59, H04N 25/708

(54) **MOVING TARGET DETECTION METHOD AND APPARATUS, AND DETECTION DEVICE**
VERFAHREN UND VORRICHTUNG ZUR ERKENNUNG BEWEGLICHER ZIELE UND ERKENNUNGSVORRICHTUNG
PROCÉDÉ ET APPAREIL DE DÉTECTION DE CIBLE MOBILE, ET DISPOSITIF DE DÉTECTION

(43) Date of publication of application: 17.07.2024
(73) Proprietor: Huawei Technologies Co., Ltd., Shenzhen, Guangdong 518129 (CN)
(72) Inventor: DENG, Zhipeng, Shenzhen, Guangdong 518129 (CN); HU, Hui, Shenzhen, Guangdong 518129 (CN)
(74) Representative: Isarpatent
(86) International application number: PCT/CN2021/125166
(87) International publication number: WO 2023/065197

(56) References cited:
- EP-B1- 3 484 141
- WO-A1-2014/087840
- CN-A- 102 025 917
- CN-A- 103 945 145
- CN-A- 110 418 065
- JP-A- 2014 116 762
- US-A1- 2006 146 161
- US-A1- 2015 319 341
- US-A1- 2021 133 986
- US-A1- 2021 266 446

## Description

### TECHNICAL FIELD

This disclosure generally relates to the signal processing field, and the invention more specifically relates to a moving target detection method and apparatus, as well as a computer-readable storage medium.

### BACKGROUND

A motion detection technology is a key technology for detecting a moving target in the intelligent surveillance field, and is the basis of moving target recognition, moving target tracking, and real-time alarm.

A frame difference algorithm is a currently widely used motion detection method, and whether a moving target exists is detected by comparing luminance differences of a same pixel in two frames of images at different moments. To implement comparison between the two frames of images, a memory needs to be disposed to store a frame of image whose time is earlier. However, when an image resolution is high, costs and device power consumption caused by image storage are high.

US 2006/0146161 A1 discloses a CMOS imaging array that includes a plurality of individual pixels arranged in rows and columns. Each pixel is constructed the same and includes a photodetector (e.g., photodiode) receiving incident light and generating an output. A first, relatively lower gain, wide dynamic range amplifier circuit is provided responsive to the output of the photodetector. The first circuit is optimized for a linear response to high light level input signals. A second, relatively higher gain, lower dynamic range amplifier circuit is also provided which is responsive to the output of the photodetector. The second circuit is optimized to provide a high signal to noise ratio for low light level input signals. Subtraction of output signals from the amplifier circuits, preferably after gain compensation, can be used to detect moving objects in the scene where the integration times for the two circuits are not the same, e.g., are staggered in time or have a different period.

JP 2014-116762 A addresses the problem of how to provide a solid-state imaging apparatus for motion detection and a motion detection system capable of reducing power consumption and improving motion detection accuracy. As solution, it is suggested: Pixel synthesis between a signal with long exposure time and a signal with short exposure time outputted from an imaging apparatus for motion detection is performed a plurality of times, existence of a moving object is determined on the basis of a differential signal between the signal with long exposure time and the signal with short exposure time, and when determining no existence of a moving object, a circuit of at least a part of an image processing apparatus for motion detection or an image management apparatus is stopped. Pixel synthesis between a signal with long exposure time and a signal with short exposure time outputted from the imaging apparatus for motion detection is performed a plurality of times and existence of a moving object is determined on the basis of a differential signal between the signal with long exposure time and the signal with short exposure time. When determining no existence of a moving object in motion detection operation, a circuit of at least a part of a motion detection processing circuit or a signal processing circuit is stopped.

EP 3484 141 A1 discloses: An image processing device configured to synthesize a first image and a second image shot in two or more exposure times different in length in a parallel way within one frame time, includes: a level adjuster configured to adjust the first image and output a corrected first image having a luminance level substantially aligned with a luminance level of the second image; a movement detector configured to calculate absolute values of differences between positionally corresponding pixel pairs in the corrected first image and the second image and accumulate the calculated absolute value on an image block basis to obtain a movement detection amount on the image block basis; a movement blending ratio calculator configured to smoothen the amounts of detected movement and calculate a movement blending ratio between positionally corresponding pixel pairs based on the smoothened amounts of detected movement; and an image synthesizer configured to generate a movement-adaptive image by synthesizing pixels at the corresponding positions at the movement blending ratio.

### SUMMARY

The object of the present invention is to provide a moving target detection method and apparatus, as well as a computer-readable storage medium, to reduce costs of detecting a moving target and reduce power consumption. This object is solved by the attached independent claims and further advantageous embodiments and improvements of the present invention are listed in the dependent claims. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, a moving target detection method according to claim 4 is provided

In a possible implementation, the first pixel unit and the second pixel unit are two adjacent pixel units of a same color.

In a possible implementation, a start moment of the first duration is the same as a start moment of the second duration, or an end moment of the first duration is the same as an end moment of the second duration.

In the foregoing solution, the detection apparatus may set exposure start moments to be different and exposure end moments to be the same, or may set exposure start moments to be the same and exposure end moments to be different, so that the exposure duration of the first pixel unit is different from the exposure duration of the second pixel unit. In this way, the moving target can be detected.

In a possible implementation, the generating motion information based on the first luminance information and the second luminance information includes: generating the motion information when a difference value between the first luminance information and the second luminance information is greater than a threshold, where the motion information specifically indicates that the difference exists between the first luminance information and the second luminance information; or generating the motion information when a difference value between the first luminance information and the second luminance information is less than or equal to a threshold, where the motion information specifically indicates that no difference exists between the first luminance information and the second luminance information.

In the foregoing solution, the detection apparatus may compare the difference value between the first luminance information and the second luminance information with the threshold to determine whether the moving target exists.

According to the claimed invention, the first pixel unit and the second pixel unit share one microlens.

In the foregoing solution, the two pixel units used to detect the moving target share one microlens. This can eliminate interference, and reduce false detection caused by noise introduced by the two pixel units using different microlenses.

In a possible implementation, the controlling a first pixel unit to be exposed for first duration, and controlling a second pixel unit to be exposed for second duration includes: controlling exposure of a pixel array, where the pixel array includes the first pixel unit and the second pixel unit; and outputting first image information based on a first luminance information set corresponding to the pixel array, where the first luminance information set includes the first luminance information and the second luminance information.

In the foregoing solution, the detection apparatus may obtain, through exposure of the pixel array, the first luminance information set corresponding to the pixel array, and output the image information and generate the motion information based on the first luminance information set. The detection apparatus can detect whether the moving target exists while implementing real-time output of an image.

According to a second aspect according to the invention, a moving target detection apparatus according to claim 1 is provided. For beneficial effect, refer to the description of the first aspect. Details are not described herein again. The detection apparatus has a function of implementing a behavior in the method example in the first aspect. The function may be implemented by hardware, or may be implemented by hardware executing corresponding software. The hardware or the software includes one or more modules corresponding to the function.

According to a third aspect according to the invention, a moving target detection apparatus is provided, and includes at least one processor. The at least one processor is configured to execute a program or instructions stored in a memory, so that the apparatus implements the method according to any one of the first aspect or the possible implementations of the first aspect.

Optionally, the target detection apparatus further includes the memory configured to store the program or the instructions.

According to a fourth aspect, where the fourth aspect and its implementations and options described below are not claimed, a processor is provided, and includes an input circuit, an output circuit, and a processing circuit. The processing circuit is configured to receive a signal through the input circuit, and transmit a signal through the output circuit, so that the processor performs the method according to any one of the first aspect and the possible implementations of the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this invention.

According to a fifth aspect, where the fifth aspect and its implementations and options described below are not claimed, a computer program product is provided. The computer program product includes a computer program (which may also be referred to as code or instructions). When the computer program is run, a computer is enabled to perform the method according to any one of the first aspect or the possible implementations of the first aspect.

According to a sixth aspect according to the invention, a computer-readable storage medium according to claim 7 is provided.

According to a seventh aspect, where the seventh aspect and its implementations and options described below are not claimed, an electronic device is provided. The electronic device includes the moving target detection apparatus according to the second aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a structure of an electronic device 100 to which an embodiment of this invention is applicable;
FIG. 2 is a schematic diagram of an image sensor according to an embodiment of this invention;
FIG. 3 is a schematic diagram of a photosensitive circuit according to an embodiment of this invention;
FIG. 4 is a schematic flowchart of a moving target detection method according to an embodiment of this invention;
FIG. 5 is a schematic diagram of a pixel array and a corresponding color according to an embodiment of this invention;
FIG. 6 is another schematic diagram of a pixel array and a corresponding color according to an embodiment of this invention;
FIG. 7 is a schematic diagram of exposure time of a first pixel unit and a second pixel unit according to an embodiment of this invention;
FIG. 8 is a schematic diagram of a structure of a detection apparatus according to an embodiment of this invention;
FIG. 9 is a schematic diagram of a motion detection module according to an embodiment of this invention;
FIG. 10 is a schematic diagram of another structure of a detection apparatus according to an embodiment of this invention;
FIG. 11 is a schematic diagram of another structure of a detection apparatus according to an embodiment of this invention;
FIG. 12 is a schematic diagram of a pixel region according to an embodiment of this invention;
FIG. 13 is a schematic diagram of a correspondence between a conventional microlens and a pixel unit according to this invention;
FIG. 14 is a schematic diagram of a correspondence between a microlens and a pixel unit according to an embodiment of this invention;
FIG. 15 is a schematic diagram of a structure of a detection apparatus according to an embodiment of this application; and
FIG. 16 is a schematic diagram of a structure of an electronic device according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that, the described embodiments are merely a part rather than all of embodiments of this application.

In the specification, the claims, and the accompanying drawings of embodiments of this application, the terms "first", "second", and the like are intended to distinguish between similar objects but do not necessarily indicate a specific order or sequence. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in embodiments of this application may be applied to a surveillance device in a surveillance system, a smart home device in a smart home, and a terminal device in an industrial internet or a mobile communication system, for example, a mobile phone or a tablet computer. However, this application is not limited thereto.

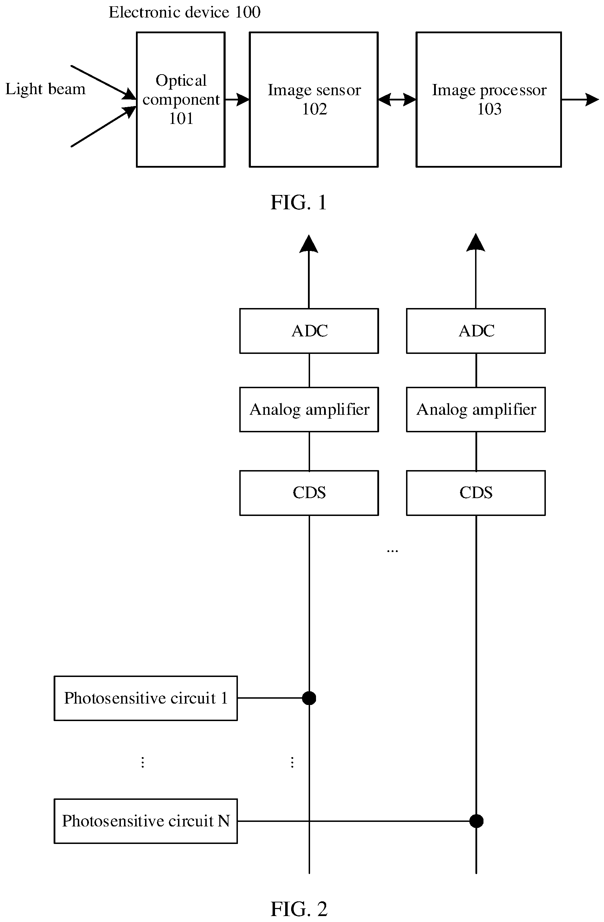

FIG. 1 is a schematic diagram of a structure of an electronic device to which an embodiment of this application is applicable.

As shown in FIG. 1, the electronic device may include an optical component 101, an image sensor 102, and an image processor 103. The electronic device may collect a light beam by using the optical component. For example, the optical component may include a lens. The image sensor 102 may receive a photon collected by the optical component and convert an optical signal into an image signal value. After the image signal value is processed by the image processor, the image processor may output an image. It should be understood that the structural diagram of the electronic device shown in FIG. 1 is merely an example provided in embodiments of this application. In specific implementation, the electronic device may be divided into other different modules. For example, the image sensor and the image processor form a same module, or the image sensor is divided into a plurality of modules. This application is not limited thereto.

FIG. 2 is a schematic diagram of an image sensor according to an embodiment of this application. The image sensor may include a pixel array. The pixel array may be formed by photodiodes (photodiodes, PDs). Each photodiode belongs to a photosensitive circuit. The photosensitive circuit converts, by using the photodiode, a received photon into a charge, and then converts the charge into a voltage value of an analog signal output by the photosensitive circuit. After the voltage value passes through a correlated double sampling (correlated double sampling, CDS) unit, an analog amplifier (analog gain) unit, and an analog-to-digital convertor (analog-to-digital convertor, ADC), an image signal value corresponding to each pixel, for example, a grayscale value, may be output. For example, the image sensor may be a complementary metal-oxide-semiconductor (complementary metal-oxide-semiconductor, CMOS) image sensor. However, this application is not limited thereto.

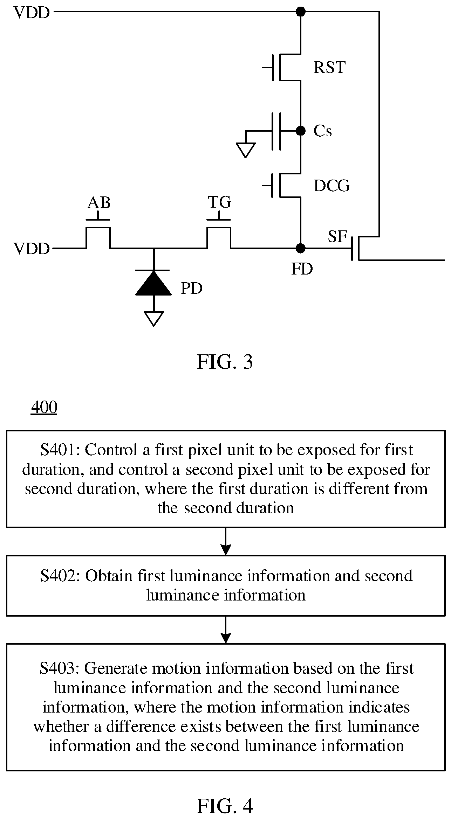

FIG. 3 is a schematic diagram of a photosensitive circuit according to an embodiment of this application. The photosensitive circuit includes a transfer gate (transfer gate, TG), a reset (reset, RST) transistor (denoted as RST in FIG. 3), a source follower (source follower, SF), a floating diffusion (floating diffusion, FD) node, a double conversion gain (double conversion gain, DCG) metal-oxide-semiconductor (metal-oxide-semiconductor, MOS) transistor (denoted as DCG in FIG. 3), a capacitor storage (capacitor storage, Cs), and an anti-blooming (anti-blooming, AB) MOS transistor (denoted as AB in FIG. 3). FIG. 3 is merely a schematic diagram of the photosensitive circuit according to an embodiment of this application. The photosensitive circuit may further include a color filter array disposed in front of a pixel array, and a microlens disposed in front of the color filter array. A surface area of the microlens determines a photosensitive area, and the microlens can improve photo sensibility of a pixel unit.

When the photosensitive circuit works, first, the RST is controlled to be turned on, so that the capacitor storage Cs is connected to a power supply end. The capacitor storage Cs releases a stored charge. Then, the RST is turned off, and the TG is turned on, so that a PD starts exposure to convert a photon into a charge, and the charge is sent to the capacitor storage Cs. The capacitor storage Cs accumulates charges from the PD. After exposure ends, an output voltage value U of the capacitor storage Cs is a ratio of the accumulated stored charge amount Q to a capacitance C of the capacitor storage Cs, and is denoted as U = Q/C. Therefore, it can be learned that a conversion gain of converting the charge amount into the voltage value by the capacitor storage Cs is 1/C. A DCG may change a conversion gain of the capacitor storage Cs. Therefore, in a low luminance condition, the conversion gain of the capacitor storage Cs can be increased by using a small capacitance, to improve detection sensitivity; or in a high luminance condition, the conversion gain can be decreased by using a large capacitance, to improve a dynamic range of detection.

For problems of costs and power consumption caused by disposing a memory to store image frames in a current frame difference algorithm, this application provides solutions in which two pixel units in a pixel array may be controlled to be exposed for different duration, and whether a moving target exists may be determined based on luminance information of the two pixel units obtained after exposure. This can detect whether the moving target exists in an image frame, reduce a detection delay of the moving target, and reduce costs and power consumption.

The following describes a moving target detection method provided in embodiments of this application with reference to the accompanying drawings.

FIG. 4 is a schematic flowchart of a moving target detection method according to an embodiment of this application.

The moving target detection method shown in FIG. 4 may be performed by a moving target detection apparatus. The detection apparatus may be an electronic device configured to detect a moving target. Alternatively, the detection apparatus may be configured in an electronic device. For example, the moving target detection apparatus may be a chip. The electronic device includes a pixel array, and the pixel array includes a plurality of pixel units. The method includes but is not limited to the following steps.

S401: The detection apparatus controls a first pixel unit to be exposed for first duration, and controls a second pixel unit to be exposed for second duration, where the first duration is different from the second duration.

The first pixel unit and the second pixel unit are two pixel units in the pixel array of the electronic device, and the first pixel unit and the second pixel unit may be referred to as a pixel pair.

Optionally, the first pixel unit and the second pixel unit may be two adjacent pixel units of a same color.

Two adjacent pixel units may be considered to receive photons at a same environment location, and the two pixel units are controlled to be exposed for different duration, so that the detection apparatus can determine, based on luminance information obtained by exposing the two pixel units, whether a luminance change occurs at the location (or region) at which/in which the pixel pair is located, and determine whether the moving target exists at the location (or region).

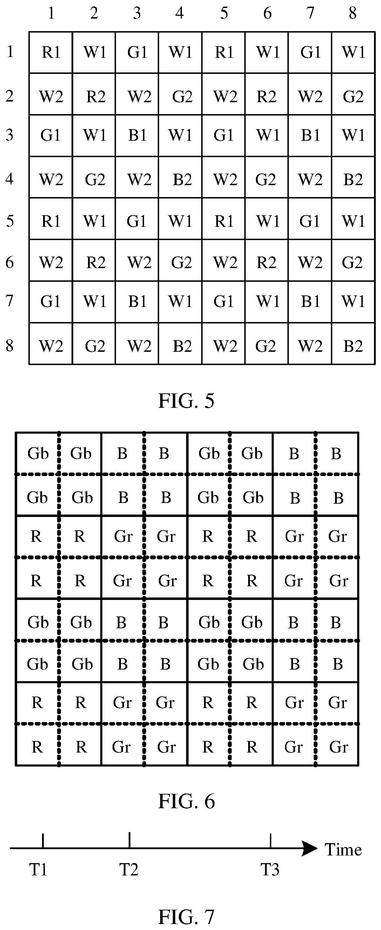

For example, in an 8×8 pixel array of eight rows and eight columns shown in FIG. 5, R represents a red pixel unit, G represents a green pixel unit, B represents a blue pixel unit, and W represents a white pixel unit. The first pixel unit and the second pixel unit may be two diagonally adjacent pixel units of a same color in a same 2×2 pixel unit block. For example, in a 2×2 pixel unit block in which the first column and the second column intersect with the first row and the second row shown in FIG. 5, the first pixel unit and the second pixel unit may be two red pixel units R1 and R2 that are diagonally adjacent, or the first pixel unit and the second pixel unit may be two white pixel units W1 and W2 that are diagonally adjacent. Alternatively, the first pixel unit and the second pixel unit may be two green pixel units G1 and G2 that are diagonally adjacent, or two blue pixel units B1 and B2 that are diagonally adjacent. This is not limited in this application.

For another example, in an 8×8 pixel array of eight rows and eight columns shown in FIG. 6, pixel units in one 2×2 pixel unit block have a same color, and may be green light Gb or Gr, blue light B, or red light R. The first pixel unit and the second pixel unit may be any two pixel units of a same color in a 2×2 pixel unit block, for example, two pixel units that are left and right adjacent, top and bottom adjacent, or diagonally adjacent.

It should be noted that the foregoing two examples are preferable solutions provided in embodiments of this application, but this application is not limited thereto. In a specific implementation, two adjacent pixel units in the pixel array may be selected. For example, one or more pixel units may be spaced between the first pixel unit and the second pixel unit, and detection of the moving target by using the solution provided in this embodiment of this application also falls within the protection scope of this application.

Optionally, a start moment of the first duration is the same as a start moment of the second duration, or an end moment of the first duration is the same as an end moment of the second duration.

For example, the detection apparatus may control both the first pixel unit and the second pixel unit to start to be exposed at a moment T1 shown in FIG. 7, the second pixel unit to stop being exposed at a moment T2, and the first pixel unit to stop being exposed at a moment T3. In this case, the first duration is T3-T1, and the second duration is T2-T1. The detection apparatus may obtain luminance information obtained by exposing the first pixel unit for the first duration, and luminance information obtained by exposing the second pixel unit for the second duration.

For another example, the detection apparatus may control the first pixel unit to start to be exposed at a moment T1 shown in FIG. 7, control the second pixel unit to start to be exposed at a moment T2 shown in FIG. 7, and control both the first pixel unit and the second pixel unit to stop being exposed at a moment T3. In this case, the first duration is T3-T1, and the second duration is T3-T2. The detection apparatus may obtain luminance information obtained by exposing the first pixel unit for the first duration, and luminance information obtained by exposing the second pixel unit for the second duration.

In a specific implementation, a time sequence processing manner when the start moment of the first duration is the same as the start moment of the second duration is different from that when the end moment of the first duration is the same as the end moment of the second duration. For example, when the start moment of the first duration is the same as the start moment of the second duration, and the first duration is greater than the second duration, after the second duration ends, the detection apparatus may obtain the luminance information obtained by exposing the second pixel unit for the second duration, need to wait for the end of the first duration to obtain the luminance information obtained by exposing the first pixel unit for the first duration, and generate motion information based on luminance information corresponding to the two pixel units. When the end moment of the first duration is the same as the end moment of the second duration, the detection apparatus may obtain corresponding luminance information and generate motion information after exposure of the two pixel units ends at the same time. A time sequence design is simpler when exposure of the two pixels ends at the same time. It should be understood that the start moments and the end moments of the first duration and the second duration may alternatively be different. For example, the second duration belongs to a time period within the first duration, and motion detection can also be implemented based on the solution provided in this embodiment of this application. This is not limited in this application.

S402: The detection apparatus obtains first luminance information and second luminance information.

The first luminance information indicates luminance obtained by exposing the first pixel unit for the first duration, and the second luminance information indicates luminance obtained by exposing the second pixel unit for the second duration.

According to the claimed invention, the detection apparatus controls a first conversion unit to convert, into a first voltage value by using a first conversion gain, a charge obtained by exposing the first pixel unit for the first duration; and obtain the first luminance information, where the first luminance information is obtained based on the first voltage value. The detection apparatus controls a second conversion unit to convert, into a second voltage value by using a second conversion gain, a charge obtained by exposing the second pixel unit for the second duration; and obtains the second luminance information, where the second luminance information is obtained based on the second voltage value. A ratio of the first conversion gain to the second conversion gain is a first ratio, a ratio of the first duration to the second duration is a second ratio, and the first ratio is inversely proportional to the second ratio.

It should be noted that, that the conversion unit converts a charge into a voltage value may be understood as that the conversion unit outputs an analog signal after obtaining a charge obtained by exposing a pixel unit, and a voltage value of the analog signal is the voltage value obtained by the conversion unit through conversion. In addition, that the luminance information is obtained based on the voltage value. In a specific implementation, the luminance information may be the voltage value output by the conversion unit, that is, the first voltage value represents the first luminance information, and the second voltage value represents the second luminance information. Alternatively, the luminance information may be obtained by processing the voltage value of the conversion unit by another unit/module. This is not limited in this application.

The detection apparatus adjusts, based on different conversion gains corresponding to the first pixel unit and the second pixel unit, exposure duration of the first pixel unit and the second pixel unit to be different. When luminance at locations at which the first pixel unit and the second pixel unit each are located does not change, obtained luminance information is the same. However, when luminance at locations at which the first pixel unit and the second pixel unit each are located changes within an exposure time period, obtained luminance information is different, so that the detection apparatus can detect, based on the luminance information of the two pixel units, whether the moving target exists.

For example, the first duration is greater than the second duration, that is, exposure time of the first pixel unit is longer than exposure time of the second pixel unit. When luminance at a location at which the pixel pair is located does not change within the first duration, a charge amount Q1 output by the first pixel unit is greater than a charge amount Q2 output by the second pixel unit, and when a ratio of the first duration to the second duration is a second ratio a, Q1/Q2 = a. The first conversion unit converts the charge amount Q1 into the first voltage value U1 by using the first conversion gain 1/C1, that is, U1 = Q1/C1, and the second conversion unit converts the charge amount Q2 into the second voltage value U2 by using the second conversion gain 1/C2. Because the conversion gain ratio is inversely proportional to the duration ratio, the ratio of 1/C1 to 1/C2 is 1/a, and U1 = U2. The first luminance information obtained by the detection apparatus based on U1 is the same as the second luminance information obtained based on U2. Therefore, it can be determined that no moving target exists. When luminance at a location at which the pixel pair is located changes within the first duration, voltage values output by the first conversion unit and the second conversion unit are different, so that the detection apparatus can obtain different luminance information based on different exposure duration of the two pixel units, thereby determining whether the moving target exists.

According to the claimed invention, the conversion unit includes the capacitor storage Cs and the DCG that are in the photosensitive circuit shown in FIG. 3 and that are configured to store a charge. The detection apparatus controls the DCG to adjust a conversion gain of the capacitor storage Cs. The detection apparatus controls a first DCG in a photosensitive circuit of the first pixel unit, so that a conversion gain of a first capacitor storage corresponding to the first pixel unit is a first conversion gain. The first capacitor storage is configured to store a charge output by the first pixel unit. The detection apparatus controls a second DCG in a photosensitive circuit of the second pixel unit to adjust a conversion gain of a second capacitor storage corresponding to the second pixel unit to a second conversion gain. The second capacitor storage is configured to store a charge output by the second pixel unit. The conversion unit may further include a CDS unit and/or an analog amplifier unit connected to the photosensitive circuit.

Optionally, the detection apparatus may further increase or decrease the voltage value of the output signal based on an algorithm. In this way, when luminance does not change, luminance information of the two pixel units is the same, and when luminance changes, luminance information of the two pixel units is different.

For example, conversion gains of the first conversion unit and the second conversion unit may be the same. The detection apparatus may obtain a voltage value obtained by the first conversion unit after the first pixel unit is exposed for the first duration, obtain a first voltage value by decreasing the voltage value to 1/a based on the algorithm, obtain the first luminance information based on the first voltage value, and then obtain the second luminance information based on a second voltage value obtained by the second conversion unit after the second pixel unit is exposed for the second duration. Therefore, when luminance does not change, the two pieces of luminance information is the same.

For another example, conversion gains of the first conversion unit and the second conversion unit may be the same, and the detection apparatus may obtain the first luminance information based on a first voltage value obtained by the first conversion unit after the first pixel unit is exposed for the first duration. After obtaining the voltage value obtained by the first conversion unit after the first pixel unit is exposed for the first duration, the detection apparatus increases, based on the algorithm, the voltage value by a times to obtain a second voltage value, and obtains the second luminance information based on the second voltage value. Therefore, when luminance does not change, the two pieces of luminance information is the same.

S403: The detection apparatus generates motion information based on the first luminance information and the second luminance information, where the motion information indicates whether a difference exists between the first luminance information and the second luminance information.

The first luminance information may specifically be a first luminance value obtained by exposing the first pixel unit for the first duration, and the second luminance information may specifically be a second luminance value obtained by exposing the second pixel unit for the second duration.

Optionally, that the detection apparatus generates motion information based on the first luminance information and the second luminance information includes: generating the motion information when a difference value between the first luminance information and the second luminance information is greater than a threshold, where the motion information specifically indicates that the difference exists between the first luminance information and the second luminance information.

When the difference value between the first luminance information and the second luminance information is greater than the threshold, it may be considered that the moving target exists, and the output motion information indicates that the difference exists between the first luminance information and the second luminance information, or the motion information indicates that the moving target exists. This may specifically include but is not limited to the following two implementations.

Implementation 1: The detection apparatus may calculate a difference between the first luminance value and the second luminance value, that is, the difference value. The detection apparatus compares the difference value with a preset threshold, and generates motion information if the difference value is greater than the preset threshold, where the motion information indicates the difference exists between the first luminance information and the second luminance information.

Implementation 2: The detection apparatus may preset two thresholds, for example, a first threshold and a second threshold, where the first threshold is a positive number, and the second threshold is a negative number. The generating the motion information when a difference value between the first luminance information and the second luminance information is greater than a threshold includes:
The detection apparatus generates first motion information if the difference between the first luminance value and the second luminance value is greater than the first threshold, where the first motion information indicates that the difference between the first luminance value and the second luminance value is greater than the first threshold; or
the detection apparatus generates second motion information if the difference between the first luminance value and the second luminance value is less than the second threshold, where the second motion information indicates that the difference between the first luminance value and the second luminance value is less than the second threshold.

In Implementation 2, the motion information generated by the detection apparatus indicates whether environment luminance specifically changes from bright to dark or from dark to bright within the first duration.

For example, the first duration is greater than the second duration, and an end moment of the first duration is the same as an end moment of the second duration, that is, an exposure start moment of the second pixel unit is later than an exposure start moment of the first pixel unit. The detection apparatus may preset a first threshold T₁ and a second threshold T₂, where T₁ is a positive number, and T₂ is a negative number. The detection apparatus calculates a difference I_{diff} between the first luminance value I₁ and the second luminance value I₂, where I_{diff} = I₁ - I₂.

If I_{diff} > T₁, that is, I₁ > I₂, and I_{diff} is greater than T₁, it indicates that luminance of an environment in which the first pixel unit and the second pixel unit are located changes from bright to dark within the first duration. Therefore, it is considered that a negative event occurs, and motion information may be generated to indicate that the negative event occurs. For example, a pulse signal corresponding to -1 is generated as the motion information.

Alternatively, if I_{diff} < T₂, that is, I₁ < I₂, I_{diff} is a negative number, and I_{diff} is less than T₂, it indicates that luminance of an environment in which the first pixel unit and the second pixel unit are located changes from dark to bright within the first duration. Therefore, it is considered that a positive event occurs, and motion information may be generated to indicate that the positive event occurs. For example, a pulse signal corresponding to 1 is generated as the motion information.

For another example, the first duration is greater than the second duration, and a start moment of the first duration is the same as a start moment of the second duration, that is, an exposure end moment of the second pixel unit is earlier than an exposure end moment of the first pixel unit. The detection apparatus may preset a first threshold T₁ and a second threshold T₂, where T₁ is a positive number, and T₂ is a negative number. The detection apparatus calculates a difference I_{diff} between the first luminance value I₁ and the second luminance value I₂, where I_{diff}= I₁ - I₂.

If I_{diff} > T₁, it indicates that luminance of an environment in which the first pixel unit and the second pixel unit are located changes from dark to bright within the first duration. Therefore, it is considered that a positive event occurs, and motion information may be generated to indicate that the positive event occurs. For example, a pulse signal corresponding to 1 is generated as the motion information.

Alternatively, if I_{diff} < T₂, it indicates that luminance of an environment in which the first pixel unit and the second pixel unit are located changes from bright to dark within the first duration. Therefore, it is considered that a negative event occurs, and motion information may be generated to indicate that the negative event occurs. For example, a pulse signal corresponding to -1 is generated as the motion information.

Optionally, the first voltage value may represent the first luminance value, and the second voltage value may represent the second luminance value. That is, the first voltage value may correspond to the first luminance value, and the second voltage value may correspond to the second luminance value.

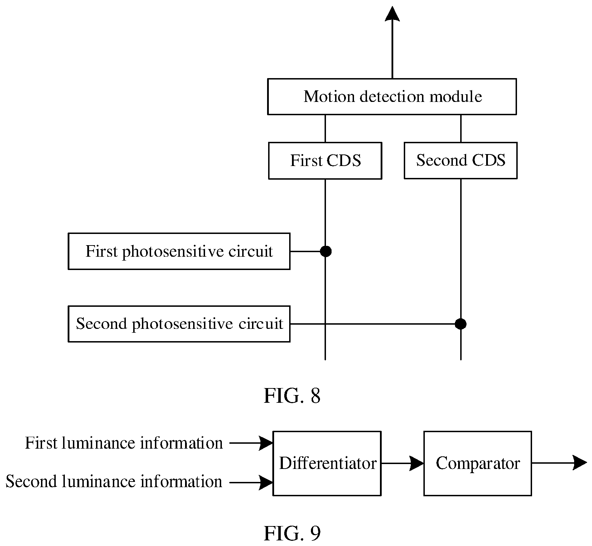

For example, as shown in FIG. 8, the first voltage value may be specifically a voltage value of a signal that is output after an output signal of a first photosensitive circuit in which the first pixel unit is located is processed by a first CDS unit, that is, the first conversion unit may include the first CDS unit, and a conversion gain of the first conversion unit is a first conversion gain. The second voltage value may be a voltage value of a signal that is output after an output signal of a second photosensitive circuit in which the second pixel unit is located is processed by a second CDS unit, that is, the second conversion unit includes the second CDS unit, and a conversion gain of the second conversion unit is a first conversion gain. A motion detection module may generate motion information based on the first voltage value of the output signal of the first CDS unit and the second voltage value of the output signal of the second CDS unit. However, this application is not limited thereto. Refer to the structure shown in FIG. 2. The first voltage value may alternatively be a voltage value of a signal output by the analog amplifier unit behind the first CDS unit, and the second voltage value may be a voltage value of a signal output by the analog amplifier unit behind the second CDS unit.

In an alternative example not according to the claimed invention, when conversion gains of the first conversion unit and the second conversion unit are the same, the first voltage value may be obtained by the foregoing detection apparatus based on an algorithm, or the second voltage value may be obtained by the foregoing detection apparatus based on an algorithm.

Optionally, refer to the structure shown in FIG. 2. The first luminance value may be a grayscale value obtained after an output signal of a photosensitive circuit in which the first pixel unit is located is processed by the CDS unit, the analog amplifier unit, and the ADC unit. Correspondingly, the second luminance value may be a grayscale value output by the ADC unit corresponding to the second pixel unit. However, this application is not limited thereto.

For example, the detection apparatus may specifically output the motion information by using the motion detection module based on the first luminance information and the second luminance information. A structure of the motion detection module includes a differentiator and a comparator shown in FIG. 9. After the first luminance information and the second luminance information are input into the differentiator, the differentiator outputs a difference value between the first luminance information and the second luminance information, and the comparator compares the difference value with a threshold, and outputs the motion information. Optionally, the first luminance information may be a first voltage value, the second luminance information may be a second voltage value, and input of the differentiator may be a signal having the first voltage value output by the first CDS unit shown in FIG. 8, and a signal having the second voltage value output by the second CDS unit shown in FIG. 8.

In an implementation not covered by the claimed invention, when the difference between the first luminance information and the second luminance information is less than or equal to the threshold, the detection apparatus may not generate the motion information.

In another implementation, when the difference value between the first luminance information and the second luminance information is less than or equal to the threshold, the motion information is generated, where the motion information specifically indicates that no difference exists between the first luminance information and the second luminance information.

For example, the difference value is a difference between the first luminance value and the second luminance value. In the foregoing implementation 2, that a difference value between the first luminance information and the second luminance information is less than or equal to a threshold includes: The difference between the first luminance value and the second luminance value is less than or equal to the first threshold, or the difference between the first luminance value and the second luminance value is greater than or equal to the second threshold. That is, T₂ ≤ I_{diff} ≤ T₁.

According to the foregoing solution, the detection apparatus may obtain corresponding luminance information by controlling exposure duration of the first pixel unit and the second pixel unit to be different, and determine, based on the luminance information, whether the moving target exists. Therefore, subsequent corresponding processing may be performed, for example, target recognition, target tracking, and alarm prompt. Whether the moving target exists in an image frame can be detected, to reduce a detection delay of the moving target. In addition, a previous frame of image for comparison does not need to be stored. This can reduce costs and power consumption.

In the method provided in this embodiment of this determines, when controlling a processing module to output image information in real time, the detection apparatus determines, based on the first luminance information and the second luminance information, whether the moving target exists. The detection apparatus detects the moving target, and controls the processing module not to output the image information when no moving target exists. When determining, based on the motion information, that the moving target exists, the detection apparatus controls the processing module to output the image information corresponding to the ROI. This may specifically include but is not limited to the following implementations.

In an implementation not covered by the claimed invention, that the detection apparatus controls a first pixel unit to be exposed for first duration, and controls a second pixel unit to be exposed for second duration includes: The detection apparatus controls exposure of a pixel array, where the first pixel unit is exposed for the first duration, and the second pixel unit is exposed for the second duration. The detection apparatus may output the motion information based on the first luminance information and the second luminance information, and the detection apparatus may further control the processing module to output first image information based on a first luminance information set corresponding to the pixel array. The first luminance information set includes the first luminance information and the second luminance information.

That is, the detection apparatus may obtain, through exposure of the pixel array, the luminance information set corresponding to the pixel array, and output the image information and generate the motion information based on the luminance information set.

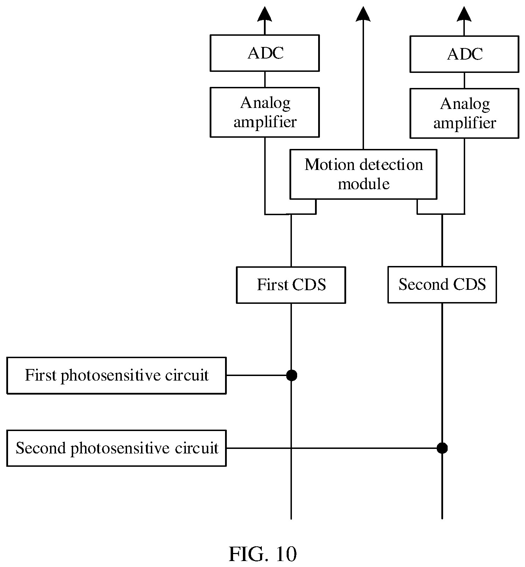

For example, as shown in FIG. 10, after an output signal of a first photosensitive circuit is processed by the first CDS unit, one channel of the first luminance information output by the CDS unit enters the motion detection module, and is used to generate the motion information to detect whether the moving target exists. After the other channel of the first luminance information passes through the analog amplifier unit and the ADC unit, a first image signal value corresponding to the first pixel unit is obtained. Similarly, one channel of the second luminance information output by the second CDS unit enters the motion detection module. After the other channel of the second luminance information passes through the analog amplifier unit and the ADC unit, a second image signal value corresponding to the second pixel unit is obtained. The first image information includes the first image signal value, the second image signal value, and an image signal value corresponding to another pixel in the pixel array. The processing module may include the analog amplifier unit and the ADC unit.

According to the claimed invention, the pixel array includes a plurality of pixel pairs, each of the pixel pairs includes two pixel units, and the first pixel unit and the second pixel unit belong to one of the pixel pairs. The detection obtains two pieces of luminance information based on different exposure duration of two pixel units in each of the plurality of pixel pairs, and generate motion information corresponding to the pixel pair, to obtain a plurality of pieces of motion information corresponding to the plurality of pixel pairs.

For example, in the pixel array shown in FIG. 5, W1 and W2 in each 2×2 pixel unit block are one pixel pair, and the pixel array includes 16 pixel pairs in total. Alternatively, in the pixel array shown in FIG. 5, R1 and R2 in the 2×2 pixel unit block including R1 and R2 are one pixel pair, the pixel array includes four pixel pairs in total, and four pieces of motion information may be generated based on the four pixel pairs.

For an exposure manner of two pixel units in each pixel pair and a manner of generating the motion information, refer to the first pixel unit and the second pixel unit. For brevity, details are not described herein again. The detection apparatus may obtain the plurality of pieces of motion information based on the plurality of pixel pairs, and determine whether the moving target exists, and may further perform target recognition, target tracking, or the like based on the plurality of pieces of motion information.

In an implementation not covered by the claimed invention, when the motion information indicates that the difference exists between the first luminance information and the second luminance information, the detection apparatus sends first control information to the processing module. The first control information indicates the processing module to output the image information corresponding to the pixel array. In response to the first control information, the processing module outputs the second image information, where the second image information is obtained by the processing module based on the second luminance information set.

That is, the detection apparatus may control exposure of the first pixel unit and the second pixel unit, to obtain the motion information. Before obtaining the motion information indicating that a luminance difference exists, the detection apparatus does not output the image information. If the motion information indicates that the difference exists between the first luminance information and the second luminance information, the detection apparatus may send first control information to the processing module. The first control information indicates the processing module to output the image information corresponding to the pixel array. In response to the first control information, the processing module outputs the second image information based on the second luminance information set corresponding to the pixel array.

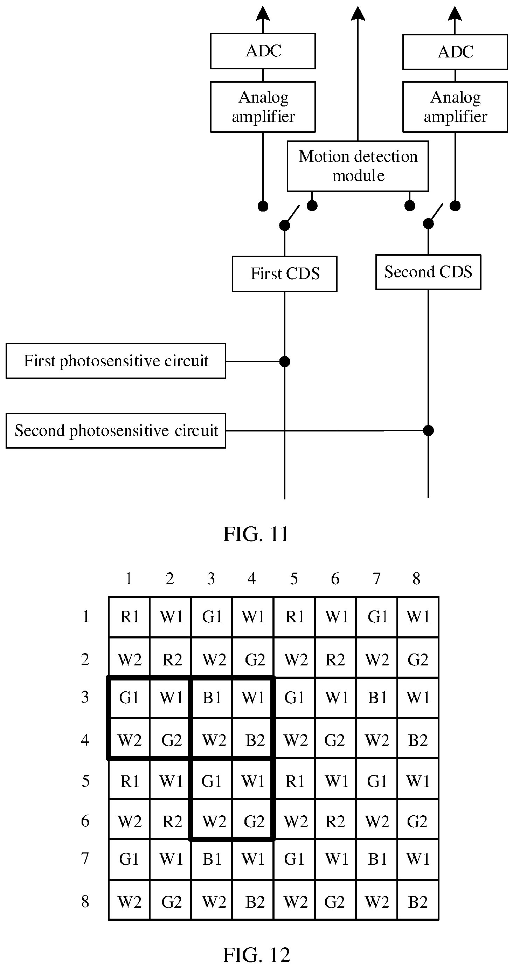

For example, as shown in FIG. 11, an output end of the CDS unit may be connected to a switching circuit. The detection apparatus may control the first CDS unit and the second CDS unit to be respectively connected to the motion detection module. The first luminance information and the second luminance information that are respectively output by the first CDS unit and the second CDS unit are input to the motion detection module, to generate the motion information. In this case, the processing module does not output the image information. If the motion information indicates that the difference exists between the first luminance information and the second luminance information, the detection apparatus may control the first CDS unit and the second CDS unit to be respectively connected to corresponding analog amplifier units. After luminance information output by each CDS unit passes through the analog amplifier unit and the ADC unit, an image signal value corresponding to the pixel unit is output. The processing module may include an analog amplifier unit and an ADC unit corresponding to each photosensitive circuit. The detection apparatus may control, based on the first control information, each CDS unit to be connected to a corresponding analog amplifier unit. In response to the first control information, the processing module obtains luminance information output by each CDS unit, to obtain a second luminance information set, and outputs second image information, where the second image information includes an image signal value corresponding to a pixel unit in the pixel array. If no difference exists between the first luminance information and the second luminance information, for example, the motion detection module determines that no difference exists and does not output the motion information, or the motion information is output to indicate that no difference exists, the detection apparatus may continue to perform moving target detection, and the processing module does not output the image information. This manner may be applied to a surveillance scenario. When the detection apparatus determines that no moving target exists, image information is not output for subsequent image processing, display, and the like. This can reduce power consumption.

Optionally, the pixel array includes a plurality of pixel pairs for moving target detection. In this implementation, the detection apparatus may determine, based on one or more of a plurality of pieces of motion information corresponding to the plurality of pixel pairs, whether to control the processing apparatus to output the image information.

According to the claimed invention, the detection apparatus determines apparatus a first pixel region in the pixel array based on the plurality of pieces of motion information corresponding to the plurality of pixel pairs, and the detection apparatus sends second control information to the processing module. The second control information indicates the processing module to output image information corresponding to the first pixel region. In response to the second control information, the processing module outputs third image information based on a third luminance information set.

The first pixel region may be referred to as an ROI.

For example, in the pixel array shown in FIG. 12, W1 and W2 in each 2×2 pixel unit block are one pixel pair, and the pixel array includes 16 pixel pairs in total. The detection apparatus obtains a plurality of pieces of motion information based on the plurality of pieces of pixel pairs. In pixel pairs in rows 3 and 4 of columns 1 and 2, pixel pairs in rows 3 and 4 of columns 3 and 4, and pixel pairs in rows 5 and 6 of columns 3 and 4 in the pixel array, motion information that is in the plurality of pieces of motion information and that corresponds to the three pixel pairs indicates that a moving target exists (that is, a difference exists between two pieces of luminance information obtained based on the pixel pairs). The detection apparatus may determine, in the pixel array based on the three pieces of motion information, a first pixel region corresponding to the moving target, to control the processing module to output image information of the first pixel region. For example, the detection apparatus may determine that rows 3, 4, 5, and 6 of columns 1, 2, 3, and 4 in the pixel array are the first pixel region, or the detection apparatus may determine that rows 1 to 8 of columns 1 to 6 are the first pixel region, and control the processing module to output the image information of the first pixel region. A specific manner in which the detection apparatus determines the pixel region based on the motion information may be specified based on a requirement in a specific implementation. This is not limited in this application.

According to the claimed invention, the detection apparatus determines an ROI based on the plurality of pieces of motion information, and control the processing module to output image information corresponding to the ROI, to perform subsequent processing such as target recognition or target tracking. Outputting only the image information corresponding to the ROI can reduce power consumption.

According to the foregoing moving target detection method provided in this embodiment of this application, the moving target can be detected. However, in a low probability case, for example, when a pixel pair is located at an edge of the pixel array, a false detection event may occur due to noise. This embodiment of this application further provides the following interference elimination manner, but this application is not limited thereto.

Manner 1: After obtaining original motion information of each of the plurality of pixel pairs according to the foregoing method, the detection apparatus filters a plurality of pieces of original motion information.

Optionally, the detection apparatus may perform median filtering on the plurality of pieces of original motion information.

Specifically, the pixel array may include a plurality of pixel pair regions, and one pixel pair region includes at least two pixel pairs. The detection apparatus may perform median filtering on the plurality of pieces of original motion information corresponding to one pixel pair region, to obtain motion information corresponding to each pixel pair in one pixel pair region.

For example, one pixel pair region may include at least nine pixel pairs. For example, one pixel pair region includes nine pixel pairs. The detection apparatus may filter nine pieces of original motion information corresponding to one pixel pair region by using a 3×3 filter, to obtain filtered motion information corresponding to each pixel pair. Optionally, the filter may perform filtering in a median filtering manner.

For another example, in the pixel array shown in FIG. 5, W1 and W2 in each 2×2 pixel unit block are one pixel pair, and it may be specified that a 4×4 pixel unit block is one pixel pair region. The pixel array shown in FIG. 5 includes four pixel pair regions in total. For example, rows 1 to 4 of columns 1 to 4 are one pixel pair region, rows 5 to 8 of columns 1 to 4 are one pixel pair region, rows 1 to 4 of columns 5 to 8 are one pixel pair region, rows 5 to 8 of columns 5 to 8 are one pixel pair region, and each pixel pair region includes four pixel pairs. After obtaining the original motion information corresponding to each pixel pair, the detection apparatus performs median filtering on the four pieces of original motion information obtained from each pixel pair region, to obtain filtered motion information corresponding to each pixel pair.

According to the claimed invention, Manner 2: The first pixel unit and the second pixel unit share one microlens. When the pixel array includes a plurality of pixel pairs, two pixel units in a same pixel pair share one microlens.

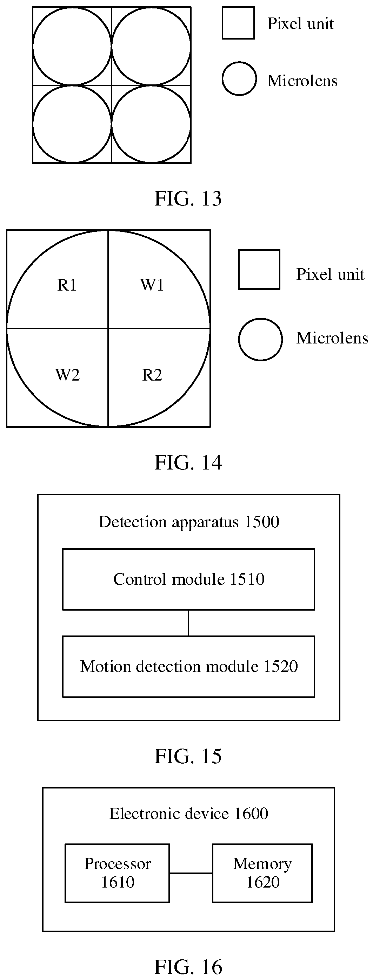

Each pixel unit in the pixel array receives a photon by using the microlens, to improve photosensibility of the pixel unit. In a conventional manner, FIG. 13 shows a 2×2 pixel unit block, including four pixel units. Each pixel unit corresponds to one microlens, and one pixel unit passes through a corresponding microlens. According to this embodiment of this application, two pixel units in a same pixel pair share one microlens. For example, as shown in FIG. 14, W1 and W2 in a 2×2 pixel unit block are one pixel pair, and four pixel units in the 2×2 pixel unit block may share one microlens, so that the two pixel units used to detect the moving target share one microlens. This can eliminate interference, and reduce false detection caused by noise introduced by the two pixel units using different microlenses.

In an example useful for understanding the invention, but not covered by the claims, Manner 3: A resolution of a lens used by the pixel array is lower than an optimal resolution of the lens corresponding to the pixel array.

The pixel array may be disposed on a photosensitive device. Based on a size of the photosensitive device and a quantity of pixel units disposed in the photosensitive device, an optimal resolution of a lens that matches the photosensitive device may be determined, and a lens whose resolution is lower than the optimal resolution is selected. For example, the pixel array uses a lens whose resolution is half of the optimal resolution. This can eliminate or reduce interference of the pixel to detect the moving target, improve accuracy of detecting the moving target.

The foregoing describes in detail the methods provided in embodiments of this application with reference to FIG. 2 to FIG. 14. The following describes in detail the detection apparatus provided in embodiments of this application.

In an implementation, the detection apparatus for performing the detection method provided in this embodiment of this application may be an image sensor (image sensor).

For example, the image sensor may include but is not limited to the pixel array, a photosensitive circuit in which each pixel unit in the pixel array is located, a CDS unit connected to each photosensitive circuit, an analog amplifier unit, and an ADC unit, and the image sensor further includes the motion detection module. The motion detection module is configured to perform the motion detection method provided in embodiments of this application, to detect a moving target. For a specific implementation, refer to the description in the foregoing method embodiments. For brevity, details are not described herein again.

In another implementation, the detection apparatus that performs the detection method provided in this embodiment of this application may be a control chip of the electronic device.

For example, the detection apparatus may be a system-on-chip of the electronic device, or referred to as a system on chip (system on chip, SOC). The electronic device may include the pixel array, the photosensitive circuit, the CDS unit, the analog amplifier unit, the ADC unit, and the like. The electronic device may control exposure of the pixel array by using the SOC, the SOC may obtain luminance information of a pixel pair to generate motion information, and the SOC may further control, based on the motion information, the processing module to output image information. For a specific implementation, refer to the description in the foregoing method embodiments. For brevity, details are not described herein again.

FIG. 15 is a schematic diagram of a structure of a detection apparatus according to an embodiment of this application. The detection apparatus includes a control module and a motion detection module.

The control module 1510 is configured to control a first pixel unit to be exposed for first duration, and control a second pixel unit to be exposed for second duration, where the first duration is different from the second duration.

The motion detection module 1520 is configured to obtain first luminance information and second luminance information, where the first luminance information indicates luminance obtained by exposing the first pixel unit for the first duration, and the second luminance information indicates luminance obtained by exposing the second pixel unit for the second duration.

The motion detection module 1520 is further configured to output motion information based on the first luminance information and the second luminance information, where the motion information indicates whether a difference exists between the first luminance information and the second luminance information.

According to the claimed invention, the detection apparatus further includes a first conversion unit and a second conversion unit. The first conversion unit is configured to convert, into a first voltage value, a charge obtained by exposing the first pixel unit for the first duration, where a conversion gain of the first conversion unit is a first conversion gain, and the first luminance information is obtained based on the first voltage value; and a second conversion unit is configured to convert, into a second voltage value, a charge obtained by exposing the second pixel unit for the second duration, where a conversion gain of the second conversion unit is a second conversion gain, and the second luminance information is obtained based on the second voltage value.

A ratio of the first conversion gain to the second conversion gain is a first ratio, a ratio of the first duration to the second duration is a second ratio, and the first ratio is inversely proportional to the second ratio.

Optionally, in some implementations, the first pixel unit and the second pixel unit are two adjacent pixel units of a same color.

Optionally, in some implementations, a start moment of the first duration is the same as a start moment of the second duration, or an end moment of the first duration is the same as an end moment of the second duration.

Optionally, in some implementations, the motion detection module 1520 is specifically configured to output the motion information when a difference value between the first luminance information and the second luminance information is greater than a threshold, where the motion information specifically indicates that the difference exists between the first luminance information and the second luminance information; or the motion detection module 1520 is specifically configured to output the motion information when a difference value between the first luminance information and the second luminance information is less than or equal to a threshold, where the motion information specifically indicates that no difference exists between the first luminance information and the second luminance information.

According to the claimed invention, the first pixel unit and the second pixel unit share one microlens.

Optionally, in some implementations, the detection apparatus further includes a processing module. The control module 1510 is specifically configured to control exposure of a pixel array, where the pixel array includes the first pixel unit and the second pixel unit; and the processing module is configured to output first image information based on a first luminance information set, where the first luminance information set includes the first luminance information and the second luminance information.

According to the claimed invention, the control module 1510 is further configured to: when the motion information indicates that the difference exists between the first luminance information and the second luminance information, output first control information to the processing module, where the first control information indicates the processing module to output second image information corresponding to a pixel array, and the pixel array includes the first pixel unit and the second pixel unit; and the processing module is further configured to: in response to the first control information, output the second image information based on a second luminance information set corresponding to the pixel array.

According to the claimed invention, a pixel array includes a plurality of pixel pairs, each of the pixel pairs includes two pixel units, and the first pixel unit and the second pixel unit belong to one of the pixel pairs. The control module 1510 is specifically configured to control exposure of pixel units in the plurality of pixel pairs, where exposure duration of two pixel units in each of the pixel pairs is different; the motion detection module 1520 is specifically configured to: obtain two pieces of luminance information of each of the plurality of pixel pairs, and output a plurality of pieces of motion information corresponding to the plurality of pixel pairs; and the control module 1510 is further configured to: obtain the plurality of pieces of motion information, and determine, based on the plurality of pieces of motion information, a first pixel region corresponding to a moving target in the pixel array. The detection apparatus further includes a processing module. The control module 1510 is further configured to output second control information to the processing module, where the second control information indicates the processing module to output third image information corresponding to the first pixel region; and the processing module is configured to: in response to the second control information, output the third image information based on a third luminance information set corresponding to the first pixel region.

Optionally, in some implementations, the pixel array includes a plurality of pixel pair regions, one of the pixel pair regions includes at least two of the plurality of pixel pairs, and the motion detection module 1520 is specifically configured to: determine original motion information of each of the pixel pairs based on the two pieces of luminance information of each of the plurality of pixel pairs; and filter a plurality of pieces of original motion information corresponding to the pixel pairs in one of the pixel pair regions, to obtain motion information corresponding to each pixel pair in one of the pixel pair regions.

FIG. 16 is a schematic diagram of a structure of an electronic device according to an embodiment of this application. The electronic device includes at least one processor 1610 and a memory 1620. The at least one processor 1610 is configured to execute a program or instructions stored in the memory, so that the electronic device performs the method in the embodiments shown in FIG. 4.

An embodiment of this application further provides a processor, including an input circuit, an output circuit, and a processing circuit. The processing circuit is configured to: receive a signal through the input circuit, and transmit a signal through the output circuit, so that the processor performs the method in the embodiments shown in FIG. 4. It should be understood that the processing apparatus may be one or more chips.

According to the method provided in embodiments of this application, this application further provides a computer program product. The computer program product includes computer program code. When the computer program code is executed by one or more processors, an apparatus including the processor is enabled to perform the method in the embodiments shown in FIG. 4.

According to the method provided in embodiments of this application, this application further provides a computer-readable storage medium. The computer-readable storage medium stores program code. When the program code is run by one or more processors, an apparatus including the processor is enabled to perform the method in the embodiments shown in FIG. 4.

According to the method provided in embodiments of this application, this application further provides a system. The system includes the foregoing plurality of terminal apparatuses. The system may further include the foregoing one or more communication apparatuses.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Therefore, the protection scope of this application shall be subject to the protection scope of the claims.

## Claims

1. A moving target detection apparatus, comprising:
a control module (1510), configured to control a first pixel unit to be exposed for first duration, and control a second pixel unit to be exposed for second duration, wherein the first duration is different from the second duration; and
a motion detection module (1520), configured to obtain first luminance information and second luminance information, wherein the first luminance information indicates luminance obtained by exposing the first pixel unit for the first duration, and the second luminance information indicates luminance obtained by exposing the second pixel unit for the second duration, wherein
the motion detection module (1520) is further configured to output motion information based on the first luminance information and the second luminance information, wherein the motion information indicates whether a difference exists between the first luminance information and the second luminance information; and
wherein a pixel array comprises a plurality of pixel pairs, each of the pixel pairs comprises two pixel units, and the first pixel unit and the second pixel unit belong to one of the pixel pairs;
the control module (1510) is specifically configured to control exposure of pixel units in the plurality of pixel pairs, wherein exposure duration of two pixel units in each of the pixel pairs is different;
the motion detection module (1520) is specifically configured to: obtain two pieces of luminance information of each of the plurality of pixel pairs, and output a plurality of pieces of motion information corresponding to the plurality of pixel pairs;
the control module (1510) is further configured to: obtain the plurality of pieces of motion information, and determine, based on the plurality of pieces of motion information, a pixel region corresponding to a moving target in the pixel array as a region of interest, ROI; and
the detection apparatus further comprises a processing module, wherein the control module (1510) is further configured to output control information to the processing module, wherein the processing module does not output image information corresponding to the respective pixel pairs of the pixel array if the respective piece of motion information indicates that no difference exists between the first luminance information and the second luminance information, and the processing module is configured to output image information corresponding to the ROI if the respective piece of motion information indicates that the difference exists; and
the apparatus further comprises:
a first conversion unit, configured to convert, into a first voltage value, a charge obtained by exposing the first pixel unit for the first duration, wherein a conversion gain of the first conversion unit is a first conversion gain, and the first luminance information is obtained based on the first voltage value; and
a second conversion unit, configured to convert, into a second voltage value, a charge obtained by exposing the second pixel unit for the second duration, wherein a conversion gain of the second conversion unit is a second conversion gain, and the second luminance information is obtained based on the second voltage value, wherein
a ratio of the first conversion gain to the second conversion gain is a first ratio, a ratio of the first duration to the second duration is a second ratio, and the first ratio is inversely proportional to the second ratio; and
wherein the first and the second conversion units are respectively included in a photosensitive circuit of the first and the second pixel units, wherein each photosensitive circuit includes a photodiode, PD, a reset, RST, transistor, a transfer gate, TG, a source follower, SF, a floating diffusion, FD, node, a double conversion gain, DCG, transistor, a capacitor storage, Cs, and an anti-blooming, AB, transistor, wherein the TG, a gate of the SF, and the DCG transistor which is in series with the Cs, are all physically connected to the FD node; and wherein the detection apparatus controls each DCG transistor to adjust the conversion gain of the capacitor storage Cs to ensure the first ratio is inversely proportional to the second ratio; and
wherein the first pixel unit and the second pixel unit share one microlens.

2. The apparatus according to claim 1, wherein
the motion detection module (1520) is specifically configured to output the motion information when a difference value between the first luminance information and the second luminance information is greater than a threshold, wherein the motion information specifically indicates that the difference exists between the first luminance information and the second luminance information; or
the motion detection module (1520) is specifically configured to output the motion information when a difference value between the first luminance information and the second luminance information is less than or equal to a threshold, wherein the motion information specifically indicates that no difference exists between the first luminance information and the second luminance information.

3. The apparatus according to claim 1, wherein the pixel array comprises a plurality of pixel pair regions, one of the pixel pair regions comprises at least two of the plurality of pixel pairs, and the motion detection module (1520) is specifically configured to:
determine original motion information of each of the pixel pairs based on the two pieces of luminance information of each of the plurality of pixel pairs; and
filter a plurality of pieces of original motion information corresponding to the pixel pairs in one of the pixel pair regions, to obtain motion information corresponding to each pixel pair in one of the pixel pair regions.

4. A moving target detection method, comprising:
controlling (S401) a first pixel unit to be exposed for first duration, and controlling a second pixel unit to be exposed for second duration, wherein the first duration is different from the second duration;
obtaining (S402) first luminance information and second luminance information, wherein the first luminance information indicates luminance obtained by exposing the first pixel unit for the first duration, and the second luminance information indicates luminance obtained by exposing the second pixel unit for the second duration; and
generating (S403) motion information based on the first luminance information and the second luminance information, wherein the motion information indicates whether a difference exists between the first luminance information and the second luminance information; and
wherein a pixel array includes a plurality of pixel pairs, each of the pixel pairs includes two pixel units, and the first pixel unit and the second pixel unit belong to one of the pixel pairs;
the controlling (401) a first pixel unit to be exposed for first duration, and controlling a second pixel unit to be exposed for second duration comprises:
controlling exposure of pixel units in the plurality of pixel pairs, where exposure duration of two pixel units in each of the pixel pairs is different;
obtaining two pieces of luminance information of each of the plurality of pixel pairs, and generating a plurality of pieces of motion information corresponding to the plurality of pixel pairs;
determining, based on the plurality of pieces of motion information, a pixel region corresponding to a moving target in the pixel array as a region of interest, ROI;
controlling a processing module to not output image information corresponding to the respective pixel pairs of the pixel array if the respective piece of motion information indicates that no difference exists between the first luminance information and the second luminance information, and to output image information corresponding to the ROI if the respective piece of motion information indicates that the difference exists; and
wherein the obtaining (S402) first luminance information and second luminance information comprises:
controlling a first conversion unit to convert, into a first voltage value by using a first conversion gain, a charge obtained by exposing the first pixel unit for the first duration;
obtaining the first luminance information, wherein the first luminance information is obtained based on the first voltage value;
controlling a second conversion unit to convert, into a second voltage value by using a second conversion gain, a charge obtained by exposing the second pixel unit for the second duration; and
obtaining the second luminance information, wherein the second luminance information is obtained based on the second voltage value, wherein
a ratio of the first conversion gain to the second conversion gain is a first ratio, a ratio of the first duration to the second duration is a second ratio, and the first ratio is inversely proportional to the second ratio; and
wherein the first and the second conversion units are respectively included in a photosensitive circuit of the first and the second pixel units, wherein each photosensitive circuit includes a photodiode, PD, a reset, RST, transistor, a transfer gate, TG, a source follower, SF, a floating diffusion, FD, node, a double conversion gain, DCG, transistor, a capacitor storage, Cs, and an anti-blooming, AB, transistor, wherein the TG, a gate of the SF, and the DCG transistor which is in series with the Cs, are all physically connected to the FD node; and the method further comprises controlling each DCG transistor to adjust the conversion gain of the capacitor storage Cs to ensure the first ratio is inversely proportional to the second ratio; and
wherein the first pixel unit and the second pixel unit share one microlens.

5. The method according to claim 4, wherein the first pixel unit and the second pixel unit are two adjacent pixel units of a same color.

6. The method according to any one of claim 4 to 5, wherein a start moment of the first duration is the same as a start moment of the second duration, or an end moment of the first duration is the same as an end moment of the second duration.

7. A computer-readable storage medium, wherein the computer-readable storage medium stores a computer program, and when the computer program is run on the apparatus according to claim 1, the method according to any one of claims 4 to 6 is implemented.

## Patentansprüche

1. Erfassungseinrichtung für ein sich bewegendes Ziel, die umfasst:
ein Steuermodul (1510), das konfiguriert ist, um eine erste Pixeleinheit zu steuern, um für eine erste Dauer belichtet zu werden, und eine zweite Pixeleinheit zu steuern, um für eine zweite Dauer belichtet zu werden, wobei die erste Dauer von der zweiten Dauer differiert; und
ein Bewegungserfassungsmodul (1520), das konfiguriert ist, um erste Luminanzinformationen und zweite Luminanzinformationen zu erhalten, wobei die ersten Luminanzinformationen eine Luminanz, die durch Belichten der ersten Pixeleinheit für die erste Dauer erhalten wird, angeben und die zweiten Luminanzinformationen die Luminanz, die durch Belichten der zweiten Pixeleinheit für die zweite Dauer erhalten wird, angeben, wobei
das Bewegungserfassungsmodul (1520) ferner konfiguriert ist, um Bewegungsinformationen basierend auf den ersten Luminanzinformationen und den zweiten Luminanzinformationen auszugeben, wobei die Bewegungsinformationen angeben, ob eine Differenz zwischen den ersten Luminanzinformationen und den zweiten Luminanzinformationen besteht; und
wobei ein Pixelarray eine Vielzahl von Pixelpaaren umfasst, jedes der Pixelpaare zwei Pixeleinheiten umfasst und die erste Pixeleinheit und die zweite Pixeleinheit zu einem der Pixelpaare gehören;
das Steuermodul (1510) speziell konfiguriert ist, um eine Belichtung von Pixeleinheiten in der Vielzahl von Pixelpaaren zu steuern, wobei eine Belichtungsdauer von zwei Pixeleinheiten in jedem der Pixelpaare differiert;
das Bewegungserfassungsmodul (1520) speziell konfiguriert ist zum: Erhalten von zwei Teilen der Luminanzinformationen von jedem der Vielzahl von Pixelpaaren und Ausgeben einer Vielzahl von Teilen der Bewegungsinformationen, die der Vielzahl von Pixelpaaren entsprechen;
das Steuermodul (1510) ferner konfiguriert ist zum: Erhalten der Vielzahl von Teilen der Bewegungsinformationen und Bestimmen, basierend auf der Vielzahl von Teilen der Bewegungsinformationen, eines Pixelbereichs, der einem sich bewegenden Ziel in dem Pixelarray entspricht, als einen Bereich von Interesse (ROI); und die Erfassungseinrichtung ferner ein Verarbeitungsmodul umfasst, wobei das Steuermodul (1510) ferner konfiguriert ist, um Steuerinformationen an das Verarbeitungsmodul auszugeben, wobei das Verarbeitungsmodul keine Bildinformationen, die den jeweiligen Pixelpaaren des Pixelarrays entsprechen, ausgibt, falls der jeweilige Teil der Bewegungsinformationen angibt, dass keine Differenz zwischen den ersten Luminanzinformationen und den zweiten Luminanzinformationen besteht, und das Verarbeitungsmodul konfiguriert ist, um Bildinformationen, die dem ROI entsprechen, auszugeben, falls der jeweilige Teil der Bewegungsinformationen angibt, dass die Differenz besteht; und
die Einrichtung ferner umfasst:
eine erste Umwandlungseinheit, die konfiguriert ist, um eine Ladung, die durch Belichten der ersten Pixeleinheit für die erste Dauer erhalten wird, in einen ersten Spannungswert umzuwandeln, wobei eine Umwandlungsverstärkung der ersten Umwandlungseinheit eine erste Umwandlungsverstärkung ist und die ersten Luminanzinformationen basierend auf dem ersten Spannungswert erhalten werden; und
eine zweite Umwandlungseinheit, die konfiguriert ist, um eine Ladung, die durch Belichten der zweiten Pixeleinheit für die zweite Dauer erhalten wird, in einen zweiten Spannungswert umzuwandeln, wobei eine Umwandlungsverstärkung der zweiten Umwandlungseinheit eine zweite Umwandlungsverstärkung ist und die zweiten Luminanzinformationen basierend auf dem zweiten Spannungswert erhalten werden,
wobei
ein Verhältnis der ersten Umwandlungsverstärkung zu der zweiten Umwandlungsverstärkung ein erstes Verhältnis ist, ein Verhältnis der ersten Dauer zu der zweiten Dauer ein zweites Verhältnis ist und das erste Verhältnis umgekehrt proportional zu dem zweiten Verhältnis ist; und
wobei die erste und die zweite Umwandlungseinheit jeweils in einer lichtempfindlichen Schaltung der ersten und der zweiten Pixeleinheit eingeschlossen sind, wobei jede lichtempfindliche Schaltung eine Fotodiode (PD), einen Rücksetz(RST)-Transistor, ein Transfergate (TG), einen Source-Folger (SF), einen Floating-Diffusion(FD)-Knoten, einen Transistor mit doppelter Umwandlungsverstärkung (DCG), einen Kondensatorspeicher (Cs) und einen Anti-Blooming(AB)-Transistor einschließt, wobei das TG, ein Gate des SF und der DCG-Transistor, der mit dem Cs in Reihe geschaltet ist, alle mit dem FD-Knoten physikalisch verbunden sind; und wobei die Erfassungseinrichtung jeden DCG-Transistor steuert, um die Umwandlungsverstärkung des Kondensatorspeichers Cs anzupassen, um sicherzustellen, dass das erste Verhältnis umgekehrt proportional zu dem zweiten Verhältnis ist; und
wobei die erste Pixeleinheit und die zweite Pixeleinheit eine Mikrolinse gemeinsam nutzen.

2. Einrichtung nach Anspruch 1, wobei
das Bewegungserfassungsmodul (1520) speziell konfiguriert ist, um die Bewegungsinformationen auszugeben, wenn ein Differenzwert zwischen den ersten Luminanzinformationen und den zweiten Luminanzinformationen größer als eine Schwelle ist, wobei die Bewegungsinformationen speziell angeben, dass die Differenz zwischen den ersten Luminanzinformationen und den zweiten Luminanzinformationen besteht; oder
das Bewegungserfassungsmodul (1520) speziell konfiguriert ist, um die Bewegungsinformationen auszugeben, wenn ein Differenzwert zwischen den ersten Luminanzinformationen und den zweiten Luminanzinformationen kleiner als oder gleich einer Schwelle ist, wobei die Bewegungsinformationen speziell angeben, dass keine Differenz zwischen den ersten Luminanzinformationen und den zweiten Luminanzinformationen besteht.

3. Einrichtung nach Anspruch 1, wobei das Pixelarray eine Vielzahl von Pixelpaarbereichen umfasst, einer der Pixelpaarbereiche mindestens zwei der Vielzahl von Pixelpaaren umfasst und das Bewegungserfassungsmodul (1520) speziell konfiguriert ist zum:
Bestimmen von ursprünglichen Bewegungsinformationen jedes der Pixelpaare basierend auf den zwei Teilen der Luminanzinformationen jedes der Vielzahl von Pixelpaaren; und
Filtern einer Vielzahl von Teilen der ursprünglichen Bewegungsinformationen, die den Pixelpaaren in einem der Pixelpaarbereiche entsprechen, um Bewegungsinformationen, die jedem Pixelpaar in einem der Pixelpaarbereiche entsprechen, zu erhalten.

4. Erfassungsverfahren für ein sich bewegendes Ziel, das umfasst:
Steuern (S401) einer ersten Pixeleinheit, um für eine erste Dauer belichtet zu werden, und Steuern einer zweiten Pixeleinheit, um für eine zweite Dauer belichtet zu werden, wobei die erste Dauer von der zweiten Dauer differiert;
Erhalten (S402) von ersten Luminanzinformationen und zweiten Luminanzinformationen, wobei die ersten Luminanzinformationen die Luminanz, die durch Belichten der ersten Pixeleinheit für die erste Dauer erhalten wird, angeben und die zweiten Luminanzinformationen die Luminanz, die durch Belichten der zweiten Pixeleinheit für die zweite Dauer erhalten wird, angeben; und
Erzeugen (S403) von Bewegungsinformationen basierend auf den ersten Luminanzinformationen und den zweiten Luminanzinformationen, wobei die Bewegungsinformationen angeben, ob eine Differenz zwischen den ersten Luminanzinformationen und den zweiten Luminanzinformationen besteht; und wobei ein Pixelarray eine Vielzahl von Pixelpaaren einschließt, jedes der Pixelpaare zwei Pixeleinheiten einschließt und die erste Pixeleinheit und die zweite Pixeleinheit zu einem der Pixelpaare gehören;
das Steuern (401) einer ersten Pixeleinheit, um für eine erste Dauer beleuchtet zu werden, und das Steuern einer zweiten Pixeleinheit, um für eine zweite Dauer beleuchtet zu werden, umfasst:
Steuern der Belichtung von Pixeleinheiten in der Vielzahl von Pixelpaaren, wobei die Belichtungsdauer von zwei Pixeleinheiten in jedem der Pixelpaare differiert;
Erhalten von zwei Teilen der Luminanzinformationen jedes der Vielzahl von Pixelpaaren und Erzeugen einer Vielzahl von Teilen der Bewegungsinformationen, die der Vielzahl von Pixelpaaren entsprechen;
Bestimmen, basierend auf der Vielzahl von Teilen der Bewegungsinformationen, eines Pixelbereichs, der einem sich bewegenden Ziel in dem Pixelarray entspricht, als einen Bereich von Interesse (ROI);
Steuern eines Verarbeitungsmoduls, um keine Bildinformationen, die den jeweiligen Pixelpaaren des Pixelarrays entsprechen, auszugeben, falls der jeweilige Teil der Bewegungsinformationen angibt, dass keine Differenz zwischen den ersten Luminanzinformationen und den zweiten Luminanzinformationen besteht, und um Bildinformationen, die dem ROI entsprechen, auszugeben, falls der jeweilige Teil der Bewegungsinformationen angibt, dass die Differenz besteht; und
wobei das Erhalten (S402) von ersten Luminanzinformationen und zweiten Luminanzinformationen umfasst:
Steuern einer ersten Umwandlungseinheit, um eine Ladung, die durch Belichten der ersten Pixeleinheit für die erste Dauer erhalten wird, durch Verwenden einer ersten Umwandlungsverstärkung in einen ersten Spannungswert umzuwandeln;
Erhalten der ersten Luminanzinformationen, wobei die ersten Luminanzinformationen basierend auf dem ersten Spannungswert erhalten werden;
Steuern einer zweiten Umwandlungseinheit, um eine Ladung, die durch Belichten der zweiten Pixeleinheit für die zweite Dauer erhalten wird, durch Verwenden einer zweiten Umwandlungsverstärkung in einen zweiten Spannungswert umzuwandeln;
und
Erhalten der zweiten Luminanzinformationen, wobei die zweiten Luminanzinformationen basierend auf dem zweiten Spannungswert erhalten werden,
wobei
ein Verhältnis der ersten Umwandlungsverstärkung zu der zweiten Umwandlungsverstärkung ein erstes Verhältnis ist, ein Verhältnis der ersten Dauer zu der zweiten Dauer ein zweites Verhältnis ist und das erste Verhältnis umgekehrt proportional zu dem zweiten Verhältnis ist; und
wobei die erste und die zweite Umwandlungseinheit jeweils in einer lichtempfindlichen Schaltung der ersten und der zweiten Pixeleinheit eingeschlossen sind, wobei jede lichtempfindliche Schaltung eine Fotodiode (PD), einen Rücksetz(RST)-Transistor, ein Transfergate (TG), einen Source-Folger (SF), einen Floating-Diffusion(FD)-Knoten, einen Transistor mit doppelter Umwandlungsverstärkung (DCG), einen Kondensatorspeicher (Cs) und einen Anti-Blooming(AB)-Transistor einschließt, wobei das TG, ein Gate des SF und der DCG-Transistor, der mit dem Cs in Reihe geschaltet ist, alle mit dem FD-Knoten physikalisch verbunden sind; und das Verfahren ferner das Steuern jedes DCG-Transistors umfasst, um die Umwandlungsverstärkung des Kondensatorspeichers Cs anzupassen, um sicherzustellen, dass das erste Verhältnis umgekehrt proportional zu dem zweiten Verhältnis ist; und
wobei die erste Pixeleinheit und die zweite Pixeleinheit eine Mikrolinse gemeinsam nutzen.

5. Verfahren nach Anspruch 4, wobei die erste Pixeleinheit und die zweite Pixeleinheit zwei angrenzende Pixeleinheiten einer gleichen Farbe sind.

6. Verfahren nach einem der Ansprüche 4 bis 5, wobei ein Startzeitpunkt der ersten Dauer der gleiche wie ein Startzeitpunkt der zweiten Dauer ist oder ein Endzeitpunkt der ersten Dauer der gleiche wie ein Endzeitpunkt der zweiten Dauer ist.

7. Computerlesbares Speichermedium, wobei das computerlesbare Speichermedium ein Computerprogramm speichert und, wenn das Computerprogramm auf der Einrichtung nach Anspruch 1 ausgeführt wird, das Verfahren nach einem der Ansprüche 4 bis 6 implementiert wird.

## Revendications

1. Appareil de détection de cible mobile, comprenant :
un module de commande (1510), configuré pour commander une première unité de pixel à exposer pendant une première durée, et commander une seconde unité de pixel à exposer pendant une seconde durée, dans lequel la première durée est différente de la seconde durée ; et
un module de détection de mouvement (1520), configuré pour obtenir des premières informations de luminance et des secondes informations de luminance, dans lequel les premières informations de luminance indiquent une luminance obtenue en exposant la première unité de pixel pendant la première durée, et les secondes informations de luminance indiquent une luminance obtenue en exposant la seconde unité de pixel pendant la seconde durée, dans lequel
le module de détection de mouvement (1520) est en outre configuré pour émettre des informations de mouvement sur la base des premières informations de luminance et des secondes informations de luminance, dans lequel les informations de mouvement indiquent si une différence existe entre les premières informations de luminance et les secondes informations de luminance ; et
dans lequel un réseau de pixels comprend une pluralité de paires de pixels, chacune des paires de pixels comprend deux unités de pixels, et la première unité de pixel et la seconde unité de pixel appartiennent à l'une des paires de pixels ;
le module de commande (1510) est spécifiquement configuré pour commander une exposition d'unités de pixels dans la pluralité de paires de pixels, dans lequel une durée d'exposition de deux unités de pixels dans chacune des paires de pixels est différente ;
le module de détection de mouvement (1520) est spécifiquement configuré pour :
obtenir deux éléments d'informations de luminance de chacune de la pluralité de paires de pixels, et émettre une pluralité d'éléments d'informations de mouvement correspondant à la pluralité de paires de pixels ;
le module de commande (1510) est en outre configuré pour : obtenir la pluralité d'éléments d'informations de mouvement, et déterminer, sur la base de la pluralité d'éléments d'informations de mouvement, une région de pixel correspondant à une cible mobile dans le réseau de pixels en tant que région d'intérêt, ROI ; et l'appareil de détection comprend en outre un module de traitement, dans lequel le module de commande (1510) est en outre configuré pour émettre des informations de commande vers le module de traitement, dans lequel le module de traitement n'émet pas d'informations d'image correspondant aux paires de pixels respectives du réseau de pixels si l'élément respectif d'informations de mouvement indique qu'aucune différence n'existe entre les premières informations de luminance et les secondes informations de luminance, et le module de traitement est configuré pour émettre des informations d'image correspondant à la ROI si l'élément respectif d'informations de mouvement indique que la différence existe ; et
l'appareil comprend en outre :
une première unité de conversion, configurée pour convertir, en une première valeur de tension, une charge obtenue en exposant la première unité de pixel pendant la première durée, dans lequel un gain de conversion de la première unité de conversion est un premier gain de conversion, et les premières informations de luminance sont obtenues sur la base de la première valeur de tension ; et
une seconde unité de conversion, configurée pour convertir, en une seconde valeur de tension, une charge obtenue en exposant la seconde unité de pixel pendant la seconde durée, dans lequel un gain de conversion de la seconde unité de conversion est un second gain de conversion, et les secondes informations de luminance sont obtenues sur la base de la seconde valeur de tension, dans lequel
un rapport du premier gain de conversion au second gain de conversion est un premier rapport, un rapport de la première durée à la seconde durée est un second rapport, et le premier rapport est inversement proportionnel au second rapport ; et
dans lequel la première et la seconde unité de conversion sont respectivement incluses dans un circuit photosensible de la première et de la seconde unité de pixel, dans lequel chaque circuit photosensible comporte une photodiode, PD, un transistor de réinitialisation, RST, une grille de transfert, TG, un suiveur de source, SF, un nœud de diffusion flottante, FD, un transistor de double gain de conversion, DCG, un condensateur de stockage, Cs, et un transistor anti-éblouissement, AB, dans lequel la TG, une grille du SF, et le transistor DCG qui est en série avec le Cs, sont tous connectés physiquement au nœud FD ; et dans lequel l'appareil de détection commande chaque transistor DCG pour ajuster le gain de conversion du condensateur de stockage Cs afin de s'assurer que le premier rapport est inversement proportionnel au second rapport ; et
dans lequel la première unité de pixel et la seconde unité de pixel partagent une microlentille.

2. Appareil selon la revendication 1, dans lequel
le module de détection de mouvement (1520) est spécifiquement configuré pour émettre les informations de mouvement lorsqu'une valeur de différence entre les premières informations de luminance et les secondes informations de luminance est supérieure à un seuil, dans lequel les informations de mouvement indiquent spécifiquement que la différence existe entre les premières informations de luminance et les secondes informations de luminance ; ou
le module de détection de mouvement (1520) est spécifiquement configuré pour émettre les informations de mouvement lorsqu'une valeur de différence entre les premières informations de luminance et les secondes informations de luminance est inférieure ou égale à un seuil, dans lequel les informations de mouvement indiquent spécifiquement qu'aucune différence n'existe entre les premières informations de luminance et les secondes informations de luminance.

3. Appareil selon la revendication 1, dans lequel le réseau de pixels comprend une pluralité de régions de paires de pixels, l'une des régions de paires de pixels comprend au moins deux parmi la pluralité de paires de pixels, et le module de détection de mouvement (1520) est spécifiquement configuré pour :
déterminer des informations de mouvement d'origine de chacune des paires de pixels sur la base des deux éléments d'informations de luminance de chacune de la pluralité de paires de pixels ; et
filtrer une pluralité d'éléments d'informations de mouvement d'origine correspondant aux paires de pixels dans l'une des régions de paires de pixels, pour obtenir des informations de mouvement correspondant à chaque paire de pixels dans l'une des régions de paires de pixels.

4. Procédé de détection de cible mobile, comprenant :
la commande (S401) d'une première unité de pixel à exposer pendant une première durée, et la commande d'une seconde unité de pixel à exposer pendant une seconde durée, dans lequel la première durée est différente de la seconde durée ;
l'obtention (S402) de premières informations de luminance et de secondes informations de luminance, dans lequel les premières informations de luminance indiquent une luminance obtenue en exposant la première unité de pixel pendant la première durée, et les secondes informations de luminance indiquent une luminance obtenue en exposant la seconde unité de pixel pendant la seconde durée ; et
la génération (S403) d'informations de mouvement sur la base des premières informations de luminance et des secondes informations de luminance, dans lequel les informations de mouvement indiquent si une différence existe entre les premières informations de luminance et les secondes informations de luminance ; et
dans lequel un réseau de pixels comporte une pluralité de paires de pixels, chacune des paires de pixels comporte deux unités de pixels, et la première unité de pixel et la seconde unité de pixel appartiennent à l'une des paires de pixels ;
la commande (401) d'une première unité de pixel à exposer pendant une première durée, et la commande d'une seconde unité de pixel à exposer pendant une seconde durée comprend :
la commande d'une exposition d'unités de pixels dans la pluralité de paires de pixels, où une durée d'exposition de deux unités de pixels dans chacune des paires de pixels est différente ;
l'obtention de deux éléments d'informations de luminance de chacune de la pluralité de paires de pixels, et la génération d'une pluralité d'éléments d'informations de mouvement correspondant à la pluralité de paires de pixels ;
la détermination, sur la base de la pluralité d'éléments d'informations de mouvement, d'une région de pixel correspondant à une cible mobile dans le réseau de pixels en tant que région d'intérêt, ROI ;
la commande d'un module de traitement pour ne pas émettre d'informations d'image correspondant aux paires de pixels respectives du réseau de pixels si l'élément respectif d'informations de mouvement indique qu'aucune différence n'existe entre les premières informations de luminance et les secondes informations de luminance, et pour émettre des informations d'image correspondant à la ROI si l'élément respectif d'informations de mouvement indique que la différence existe ; et
dans lequel l'obtention (S402) de premières informations de luminance et de secondes informations de luminance comprend :
la commande d'une première unité de conversion pour convertir, en une première valeur de tension en utilisant un premier gain de conversion, une charge obtenue en exposant la première unité de pixel pendant la première durée ;
l'obtention des premières informations de luminance, dans lequel les premières informations de luminance sont obtenues sur la base de la première valeur de tension ;
la commande d'une seconde unité de conversion pour convertir, en une seconde valeur de tension en utilisant un second gain de conversion, une charge obtenue en exposant la seconde unité de pixel pendant la seconde durée ; et
l'obtention des secondes informations de luminance, dans lequel les secondes informations de luminance sont obtenues sur la base de la seconde valeur de tension,
dans lequel
un rapport du premier gain de conversion au second gain de conversion est un premier rapport, un rapport de la première durée à la seconde durée est un second rapport, et le premier rapport est inversement proportionnel au second rapport ; et dans lequel la première et la seconde unité de conversion sont respectivement incluses dans un circuit photosensible de la première et de la seconde unité de pixel, dans lequel chaque circuit photosensible comporte une photodiode, PD, un transistor de réinitialisation, RST, une grille de transfert, TG, un suiveur de source, SF, un nœud de diffusion flottante, FD, un transistor de double gain de conversion, DCG, un condensateur de stockage, Cs, et un transistor anti-éblouissement, AB, dans lequel la TG, une grille du SF, et le transistor DCG qui est en série avec le Cs, sont tous connectés physiquement au nœud FD ; et le procédé comprend en outre la commande de chaque transistor DCG pour ajuster le gain de conversion du condensateur de stockage Cs afin de s'assurer que le premier rapport est inversement proportionnel au second rapport ; et
dans lequel la première unité de pixel et la seconde unité de pixel partagent une microlentille.

5. Procédé selon la revendication 4, dans lequel la première unité de pixel et la seconde unité de pixel sont deux unités de pixels adjacentes de couleur identique.

6. Procédé selon l'une quelconque des revendications 4 à 5, dans lequel un moment de début de la première durée est identique à un moment de début de la seconde durée, ou un moment de fin de la première durée est identique à un moment de fin de la seconde durée.

7. Support de stockage lisible par ordinateur, dans lequel le support de stockage lisible par ordinateur stocke un programme informatique et, lorsque le programme informatique est exécuté sur l'appareil selon la revendication 1, le procédé selon l'une quelconque des revendications 4 à 6 est mis en œuvre.
